# EUROPÄISCHE PATENTSCHRIFT

(11) **EP 1 812 757 B1**
(45) Veröffentlichungstag und Bekanntmachung des Hinweises auf die Patenterteilung: **02.07.2008**
(21) Anmeldenummer: 05811322.6
(22) Anmeldetag: 10.11.2005
(51) Int. Cl.: F24D 11/02, F24D 17/00, F24D 19/10, F24D 3/08

(54) **WÄRMESPEICHER SOWIE VERWENDUNG DES WÄRMESPEICHERS IN EINEM HEIZUNGSSYSTEM MIT SOLARANLAGE UND WÄRMEPUMPE**
HEAT ACCUMULATOR AND USE THEREOF IN A HEATING SYSTEM COMPRISING A SOLAR INSTALLATION AND A HEAT PUMP
ACCUMULATEUR DE CHALEUR ET UTILISATION DE L'ACCUMULATEUR DE CHALEUR DANS UN SYSTEME DE CHAUFFAGE COMPORTANT UNE INSTALLATION SOLAIRE ET UNE POMPE A CHALEUR

(30) Priorität: 15.11.2004 DE 102004055084; 19.07.2005 DE 102005033682
(43) Veröffentlichungstag der Anmeldung: 01.08.2007
(73) Patentinhaber: Fraunhofer-Gesellschaft zur Förderung der angewandten Forschung e.V., 80686 München (DE)
(72) Erfinder: BICHLER, Christian, 4654 Bad Wimsbach (AT)
(74) Vertreter: Rösler, Uwe
(86) Internationale Anmeldenummer: PCT/EP2005/012040
(87) Internationale Veröffentlichungsnummer: WO 2006/050944

(56) Entgegenhaltungen:
- EP-A- 1 239 235
- DE-A1- 10 244 339
- DE-U1- 20 300 658
- FR-A- 2 405 443
- US-A- 4 527 618

## Beschreibung

### Technisches Gebiet

Die Erfindung bezieht sich auf einen Wärmespeicher sowie auf eine Verwendung des Wärmespeichers in einem Heizungssystem mit einer Solaranlage und einer Wärmepumpe. Das Heizungssystem dient dabei insbesondere der Gebäudeheizung und der Brauchwassererwärmung.

### Stand der Technik

Wärmespeicher sind üblicherweise Behälter mit zumindest einem Speichermedium, das Wärmeenergie speichert und bei Bedarf wieder abgibt. Als Speichermedium wird dabei häufig Wasser eingesetzt, aber auch Salzlösungen, Sand oder andere geeignete Stoffe finden Verwendung. Typischerweise sind Wärmespeicher heute ein wesentlicher Bestandteil von Gebäudeheizungssystemen, insbesondere wenn das Heizungssystem Wärmequellen nutzt, die nicht kontinuierlich verfügbar sind, wie das beispielsweise im Falle der ausschließlichen Wärmegewinnung durch eine Solaranlage zutrifft. Hierbei wird die überschüssige Wärmeenergie, d.h. die nicht sofort verbrauchte Wärmeenergie, dem Wärmespeicher zugeführt, dort gespeichert und steht somit für eine spätere Nutzung, beispielsweise während der Nacht, zur Verfügung. Der Wärmespeicher stellt daher seinerseits eine Wärmequelle im Heizungssystem dar, mit der die Heizung gespeist oder Wasser eines Brauchwassersystems erwärmt werden kann. Der Wärmespeicher erfüllt zudem in jedem Heizungssystem auch die Funktion eines Wärmepuffers, indem er jederzeit wieder abrufbare Wärmeenergie speichert und es somit ermöglicht, in Zeiten mit geringem oder keinem Wärmebedarf die Heizung, bspw. eine Verbrennungsheizung, im Heizungssystem abzuschalten, sofern der Wärmespeicher vorher eine ausreichende "Beladung" mit Wärmeenergie aufweist. Die Sicherstellung einer entsprechenden Mindestbeladung des Wärmespeichers mit Wärmeenergie wird in heutigen Heizungssystemen automatisch gesteuert. Ohne einen Wärmespeicher im Heizungssystem müsste daher die Heizung kontinuierlich betrieben werden, um jederzeit warmes Brauchwasser oder Wärme für die Gebäudeheizung verfügbar zu haben. Dies würde besonders zu Zeiten geringen oder keinem Wärmebedarfs zu einer erheblichen Energieverschwendung und damit unnötigen Kosten führen.

Die Anforderung an einen Wärmespeicher als Bestandteil eines Heizungssystems haben sich im Laufe der Zeit durch die Weiterentwicklung der Heizungstechnik, der Erschließung neuer Wärmequellen, wie Solarenergie, Erdwärme, sowie dem Einsatz moderner Isolier- und Dämmstoffe bspw. bei so genannten Niedrigenergiehäusern verändert.

Die ersten Zentralheizungssysteme bestanden aus einer zentralen Einheit zur Wärmeerzeugung, der "Zentralheizung", und lösten damit die bis anhin in einem Gebäude verwendeten zahlreichen unabhängigen Einzelheizungen (Kamine, Kachelöfen etc.) ab. Die Wärmeerzeugung erfolgte dabei in den meisten Fällen durch Verbrennung, am häufigsten durch die Verbrennung von Öl, Kohle, Holz oder Erdgas. Die Zentralheizungen wurden dabei mit Vorlauftemperaturen von bis zu 90°C betrieben. Der Grund für diese im Vergleich zu heutigen Heizungssystemen hohen Vorlauftemperaturen lag in den erhöhten Wärmeenergieanforderungen aufgrund der schlechten Wärmeisolierung der damaligen Gebäude sowie dem Wunsch nach kleinen Heizkörpern. Neben der Nutzung des Heizungswassers zur Gebäudeheizung bot sich darüber hinaus auch an, aufgrund der hohen Vorlauftemperaturen den Heizungskreislauf auch als Wärmequelle zur Erwärmung von Brauchwasser zu nutzen. Hierzu wurde in das Zentralheizungssystem typischerweise ein so genannter "Doppelmantelwärmespeicher" integriert, mit dem eine Brauchwasseraufbereitung, d.h. die Bereitstellung eines Reservoirs von erwärmten Brauchwasser mit der Bereitstellung eines Wärmespeichers (-puffers) im Heizungssystem verbunden werden konnte.

Solche Doppelmantelwärmespeicher sind z.B. aus dem Dokument DE-102 44 339 schon bekannt und weisen ein abgeschlossenes inneres Volumen auf, das von einem zweiten äußeren Volumen umschlossen wird. Beide Volumen sind voneinander durch eine sehr gut Wärme leitende Wand getrennt und stehen über diese Wand in thermischen Kontakt. Typischerweise wird in den Zentralheizungssystemen das äußere Speichervolumen mit dem Heizungskreislauf verbunden und mithin von Heizungsflüssigkeit durchströmt, während das innere Speichervolumen mit dem Brauchwassersystem verbunden ist und mithin von Frisch- bzw. Brauchwasser durchströmt wird. Die Erwärmung des Brauchwassers erfolgt durch einen Wärmeübergang vom äußeren Heizwasservolumen auf das innere Brauchwasservolumen.

Da die Heizungs- (vorlauf-) -flüssigkeit das äußere Speichervolumen durchströmt, kann sich im äußeren Speichervolumen eine annähernd gleich hohe Temperatur wie im Heizungsvorlauf einstellen. Da weiterhin die Trennwand zwischen äußerem und innerem Speichervolumen sehr gute Wärmeleiteigenschaften aufweist, kann in einem derartigen Doppelmantelwärmespeicher auch das Brauchwasser auf annähernd die Vorlauftemperaturen des Heizungsvorlaufs aufgeheizt werden. Diese Temperaturen des Brauchwassers verhindern dabei zugleich in vorteilhafter Weise, dass im Brauchwassersystemen das Problem der Legionellenbildung auftritt:

Legionellen sind beweglichen Stäbchenbakterien mit einer durchschnittlichen Länge von 2-5µm und einem Durchmesser von 0,5-0,8 µm die eine schwere Pneumonie ("Legionärskrankheit") verursachen können. Aufgrund ihrer natürlichen Verbreitung kommen Legionellen auch in geringer Anzahl im Grundwasser vor. Daher ist es selbstverständlich, dass sich in dem von den Wasserwerken gelieferten Trinkwasser Legionellen befinden können. Wenige Legionellen, meist <1KBE/Liter (- KBE:
Kolonienbildende Einheit -) sind auch im kalten Grundwasser vorhanden. Bis zu Temperaturen von etwa 20 °C vermehren sich Legionellen nur sehr langsam, so dass in diesem Bereich schon wegen der zu erwarteten geringen Konzentration kein nennenswertes Erkrankungsrisiko besteht. Erst über 20 °C steigt die Vermehrungsrate allmählich an und ist etwa zwischen 30 und 45 °C optimal. Ab etwa 50 °C erfolgt meist kaum noch Vermehrung und bei etwa 55 °C ist diese nicht mehr möglich und es kommt langsam zum Absterben. Eine sichere und mit steigenden Temperaturen zunehmend raschere Abtötung findet erst knapp oberhalb von 60 °C statt. Somit sind, sofern im Heizungssystem Brauchwasserreservoirs vorgesehen sind, zumindest zeitweise Solltemperaturen von mindestens 60°C im Brauchwasserreservoir einzuhalten.

Auf der anderen Seite führen Temperaturen von 60°C und mehr im Brauchwassersystem durch den im Brauchwasser enthaltenen Sauerstoff zur Ablagerung von Kalk im Speicher. Diese Ablagerung ist von der Wasserbeschaffenheit (Karbonathärte) abhängig und kann durch nur zeitweise Erwärmung über 60 °C verringert bzw. vermieden werden. Eine Opferanode wird häufig als Korrosionsschutz für einen Speicher eingesetzt, zusätzlich reagiert die Anode mit dem karbonhaltigen Wasser (Wandalkalisierung) und der Kalk setzt sich an der Anode an. Dies kann die Ablagerungen an Wärmetauschern verhindern.
Der Wärmebedarf zur Gebäudeheizung wurde im Laufe der Zeit durch die verbesserte Wärmedämmung und -isolierung von Gebäuden immer geringer, was den Einsatz von Niedertemperatursystemen, z.B. Fußbodenheizungen, Wandheizung usw., ermöglichte. Die für die Gebäudeheizung erforderlichen Temperaturen im Heizungsvorlauf von heutigen Heizungssystemen konnten daher grundsätzlich von 90°C auf ca. 35°C reduziert werden. Um jedoch dabei auch weiterhin das Heizungssystem als Wärmequelle für die Erwärmung des Brauchwassers zu nutzen, und andererseits die beschriebene Legionellenbildung im Brauchwassersystem nachhaltig auszuschließen, muss daher ein Heizungssystem das einen vorstehend beschriebenen Doppelmantelwärmespeicher umfasst, im äußeren Volumen auch weiterhin Temperaturen von zumindest zeitweise über 60°C aufweisen. Daraus folgt, dass die zum Betrieb von bspw. Fußbodenheizungen erforderlichen Temperaturen von ca. 35°C durch Vermischen der über 60°C wärmen Heizungsflüssigkeit mit einer kühlen Flüssigkeit oder durch Wärmeentzug erzeugt werden müssen. Dies ist jedoch zweifelsohne mit hohen Energieverlusten, zusätzlichem Regelungsaufwand und damit hohen Kosten verbunden.

In modernen Heizungsanlagen werden heute neben oder alternativ zu den ursprünglich eingesetzten Verbrennungsheizungen weitere Wärmequellen wie bspw. Sonnenenergiesysteme, Wärmerückgewinnungsanlagen, oder Wärmepumpen einzeln sowie in Kombinationen eingesetzt. Diese verschiedenen Arten von Wärmequellen unterscheiden sich unter anderem in der jeweils durch sie erzeugbaren Wärmemenge pro Zeiteinheit, der Temperatur bei der sie die Wärme abgeben sowie in der teilweisen Zeitbegrenzung ihrer Wärmeerzeugung. Jede einzelne Art stellt damit auch an einen Wärmespeicher spezielle Anforderungen, die sich bei den einzelnen Arten von Wärmequellentypen teilweise stark unterscheiden. So muss ein Wärmespeicher, der mit einer Solaranlagen verbunden ist zeitweise große Wärmemengen bei hohen Temperaturen speichern, während bei dem Einsatz einer Wärmepumpe typischerweise vergleichsweise geringere Wärmemengen bei geringeren Temperaturen zu speichern sind.

Besonders für die Kombination aus zumindest einer Solaranlage und zumindest einer Wärmepumpen in einem Heizungssystem sind heute zwei Wärmespeichersysteme bekannt und im Einsatz: a) der Solarwärmespeicher und b) der eingangs erwähnte Doppelmantelwärmespeicher.

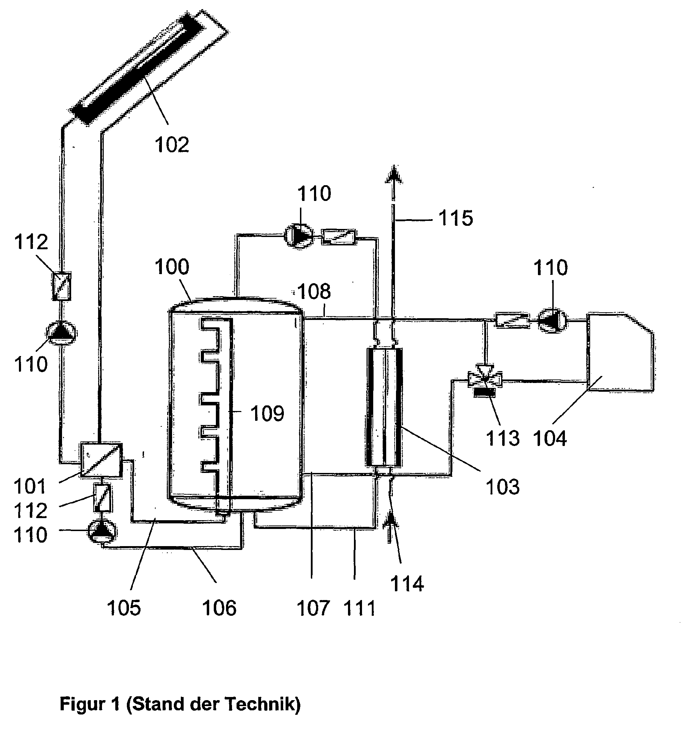

Figur 1 zeigt schematisch ein an sich bekanntes Heizungssystem mit einem Solarwärmespeicher 100, einer über einen Wärmetauscher 101 an den Solarwärmespeicher thermisch gekoppelten Solaranlage 102, einem als Durchlauferhitzer gestaltetem externen Wärmetauscher zur Brauchwassererwärmung 103, und einer konventionellen Verbrennungsheizung 104. Zur "Beladung" des Solarwärmespeichers 100 mit Wärme stehen dabei einerseits die Solaranlage 102 sowie die Verbrennungsheizung 104 zur Verfügung. Beide Wärmequellen sind über entsprechende Vor- bzw. Rücklaufleitungen (105, 106 bzw. 107, 108) mit dem Solarwärmespeicher 100 verbunden. Um Vermischung des Speicherwassers bei der Wärmebeladung des Solarwärmespeichers zu reduzieren, enthält dieser in der angegeben Ausführungsform eine so genannte Schichtladevorrichtung 109. Das Prinzip dieser Schichtladevorrichtung berücksichtigt, dass sich im Wärmespeicher 100, d.h. in der Speicherflüssigkeit, ein Temperatur- bzw. Dichteprofil derart einstellt, dass vom Speicherboden bis zur Speicherdecke die Temperatur der Speicherflüssigkeit zu- bzw. die Dichte der Speicherflüssigkeit abnimmt. Um Energieverluste zu vermeiden, wird heißes Solaranlagenvorlaufwasser 105 möglichst in die Ebene des Solarspeichers eingebracht, die dieselbe Temperatur wie das Solaranlagenvorlaufwasser selbst aufweist. Solange das im Schichtlader aufsteigende Solaranlagenvorlaufwasser 105 eine höhere Temperatur hat, wie die umgebende Speicherschicht, bleiben an der Schichtladevorrichtung angebrachte Klappen (nicht dargestellt) aufgrund des hydrostatischen Druckunterschiedes zwischen dem Inneren der Schichtladevorrichtung und der umgebenden Speicherschicht verschlossen. Im Falle der Temperatur-/ Dichtegleichheit öffnen sich die entsprechenden Klappen und das Wasser strömt aus der Schichtladevorrichtung in den Speicher. Es sind verschieden Arten von Schichtladevorrichtungen bekannt, so können bspw. anstelle der beschriebenen durch Dichtunterschiede betätigten Klappen auch aktiv angesteuerte Ventile eingesetzt werden. In Figur 1 zirkuliert das Speichermedium über die Anschlüsse 107 und 108 im Heizungssystem bzw. über eine Pumpe 110 im Wärmetauscherkreislauf, und dient so bei Bedarf, zur Warmwasseraufbereitung.

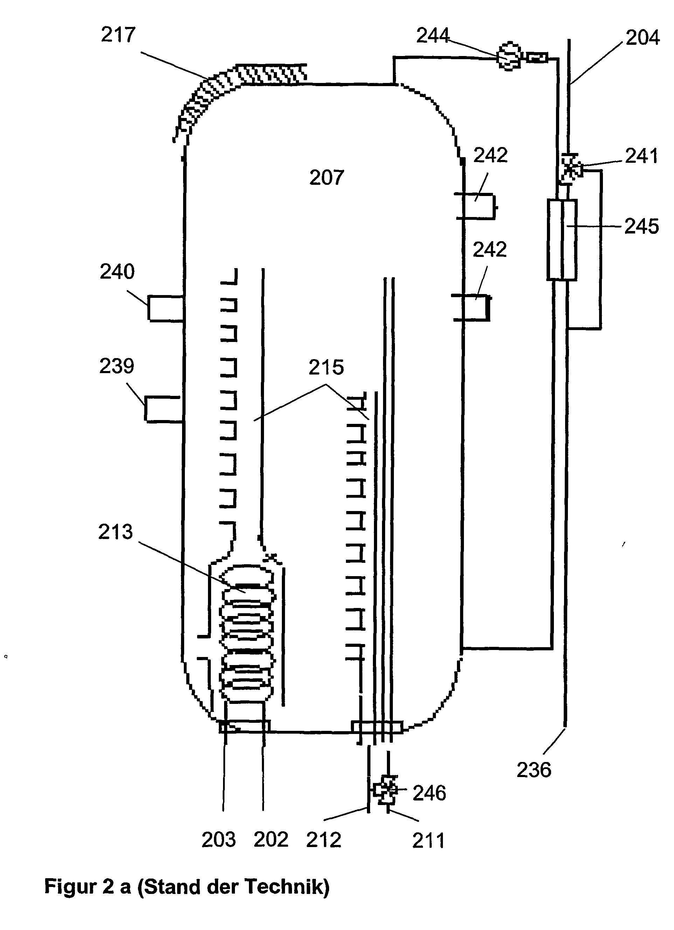

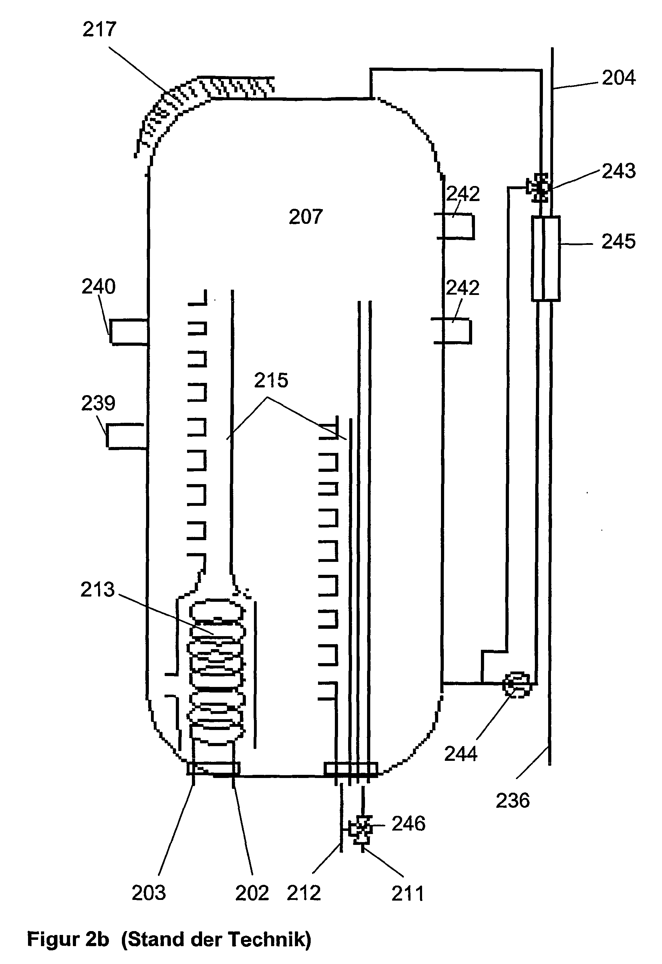

Figur 2 a zeigt schematisch den Aufbau eines typischen Solarwärmespeichers mit einem externen Brauchwasserwärmetauscher 245. Zur Beladung mit Wärme verfügt der Solarwärmespeicher über Vor- und Rücklaufanschlüsse, zu mehreren Wärmequellen: zu einer Solaranlage (202, 203), zu einer Wärmepumpe (239, 240), zu weiteren Wärmequellen 242, wie z.B. einer Verbrennungsheizung bzw. zum Gebäudeheizungskreislauf (211, 212). Anmerkung: reale Anschlusshöhen wurden in dieser wie auch in den folgenden Figuren nicht berücksichtigt.

Der Solarwärmespeicher weist weiterhin zwei Schichtladevorrichtungen 215 auf, die mit einem Gebäudeheizungskreislauf sowie der Solaranlage über die Anschlüsse 211, 212 bzw. 202 und 203 verbunden sind. Die Schichtladevorrichtung 215 für die Solaranlage enthält zudem einen Wärmetauscher 213, so dass das Speichermedium des Wärmespeichers von dem im der Solaranlage zirkulierenden Medium getrennt ist und der Wärmeübergang zwischen beiden Medien erst im Schichtlader erfolgt. Der Wärmespeicher ist weiterhin mit einer Außenisolierung 217 gegen Wärmeverluste geschützt. Für die Erwärmung des Brauchwassers wird dem Wärmetauscher 245 über die Leitung 236 Frischwasser zugeführt, das im Wärmetauscher 245 erwärmt, und anschließend über die Brauchwasserleitung 204 den Verbrauchern zugeführt wird. Aufgrund des im Wärmetauscher 245 realisierten Durchlaufprinzips, muss die Temperatur des Speichermediums wesentlich höher sein als die gewünschte Brauchwassertemperatur. Für eine Regelung der Brauchwassertemperatur kann dem Brauchwasser nach dessen Erwärmung im Wärmetauscher 245 über ein Verbrühungsschutzventil 241 kaltes Frischwasser zugeführt werden.

In Figur 2b wird zur Regelung der Brauchwassertemperatur, das heiße Speichermedium vor dem Wärmetauscher 245 über ein Mischventil 243 mit kühlerem Speichermedium, das bereits des Wärmetauscher durchströmt hat vermischt. Bei dieser Art der Brauchwassererwärmung (Figur 2a u. 2b) ergeben sich keine Probleme durch Legionellenbildung, da das Brauchwasser nach dessen Erwärmung nicht erst in ein Reservoir eingebracht sondern verbraucht wird und somit keine ausreichende Zeit zur Vermehrung der Legionellen verfügbar ist.

Derartige, auf den Betrieb mit einer Solaranlage optimierte Solarwärmespeicher weisen typischerweise ein großes Speichervolumen sowie im Betrieb hohe Speichertemperaturen von teilweise über 90°C auf. Hohe Speichertemperaturen sind aber gerade für den Durchlaufwärmetauscher 245 auch Voraussetzung für die Erwärmung des Brauchwassers.

Wird stattdessen eine Wärmepumpe als Wärmequelle in Verbindung mit dem beschriebenen Solarwärmespeicher genutzt, so zeigen sich deutliche Nachteile einer solchen Kombination. Die Effizienz einer Wärmepumpe, ausgedrückt als ihre Leistungszahl, nimmt bekanntermaßen mit zunehmender Temperatur, bei der sie Wärmeenergie zur Verfügung stellt, ab. Wärmepumpen erzeugen daher im Vergleich zu Solaranlagen typischerweise Wärmeenergie bei niedrigeren Temperaturen zwischen 20 - 50°C. Nur durch einen entsprechend erhöhten Energieeinsatz und optimierte Kältemittel können mit einer Wärmepumpe auch höhere Temperaturen erreicht werden. Allerdings wird hier der Einsatz von Wärmepumpen zur Erzeugung von Wärmeenergie gegenüber anderen Heizquellen zunehmend unwirtschaftlich. Durch die Abgabe von Wärmeenergie bei den beschriebenen geringeren Temperaturen eignen sich für Wärmepumpen daher Wärmespeicher mit vergleichsweise deutlich kleineren Speichervolumen mit direkter Brauchwasserspeicherung. Solarwärmespeicher sind daher für einen Betrieb in Verbindung mit Wärmepumpen nicht optimal einsetzbar.

Ein Solarwärmespeicher weist zusammenfassend folgende vorteilhaften Eigenschaften auf:
- Durch ein großes Speichervolumen besitzt der Solarwärmespeicher eine gute Eignung zur Speicherung solarer Wärmeerträge.
- Als Speichermedium kann Heizungswasser verwendet werden.
- Der Solarspeicher kann als hydraulische Weiche verwendet werden.
- Das Brauchwasser wird mit einem externen Wärmetauscher nach dem Prinzip der Durchlauferhitzung bereitgestellt, dadurch wird eine Legionellenbildung verhindert.
- Im Falle hoher solarer Erträge sind hohe Speichertemperaturen realisierbar.

Folgende Nachteile sind in Zusammenhang mit dem Solarspeicher zu nennen:
- Der Solarwärmespeicher ist teuer.
- Es muss ein großes Speichervolumen auf hohe Temperaturen beheizt werden, um den externen Brauchwasserwärmetauscher beladen zu können.
- Das Speichermedium (Heizungswasser) muss heißer sein als die gewünschte Brauchwassertemperatur. Die Temperaturspreizung die beim externen Wärmetauscher auftritt kann als Exergieverlust angesehen werden.
- Ein großes Speichervolumen ist in Verbindung mit einer Wärmepumpe ungünstig.
- Um die für die Brauchwassererwärmung erforderlichen Temperaturen zu erreichen muss eine Wärmepumpe Wärme bei hohen Temperaturen abgeben, d.h. niedrige Leistungszahl, höhere Energiekosten und höhere Emissionen.
- Das Speichermedium (Heizungswasser) muss für eine Niedertemperaturheizung von hohen Temperaturen auf ca. 35° C gemischt werden, was einen Exergieverlust bedeutet.
- Zur Regelung der Brauchwassertemperatur ist eine zusätzlich Pumpe 244, ein Verbrühungsschutzventil 241 oder ein Mischventil 243 erforderlich. Dabei können Verkalkungsprobleme beim Verbrühungsschutzventil und beim Mischventil auftreten. Die Regelung dieser Ventile ist aufwändig und verursacht zusätzliche Kosten.
- Zur Brauchwassererwärmung wird ein externer Wärmetauscher 245 benötigt, der seinerseits Wärmeverluste erzeugt und zusätzliche Verkalkungsprobleme mit sich bringen kann.
- Der Wärmetauscher 245 bedingt einen zusätzlichen Druckverlust im Brauchwassemetz.
- Bei fehlendem solaren Wärmeeintrag, muss ein großes Speichervolumen, sofern die Einsatzgrenze (Endtemperatur) einer ebenfalls verfügbaren Wärmepumpe erreicht ist, mit elektrischer Energie od. andere Wärmequellen teuer nach geheizt werden.
- Durch die nötigen höheren Speichertemperaturen für den externen Brauchwasserwärmetauscher 245 ist der Wärmeverlust durch die Ummantelung des Solarwärmespeichers hoch.

Im Folgenden wird nun kurz auf die Eignung des bekannten Doppelmantelwärmespeichers für einen Einsatz in Verbindung mit einer Solaranlage bzw. einer Wärmepumpe eingegangen.

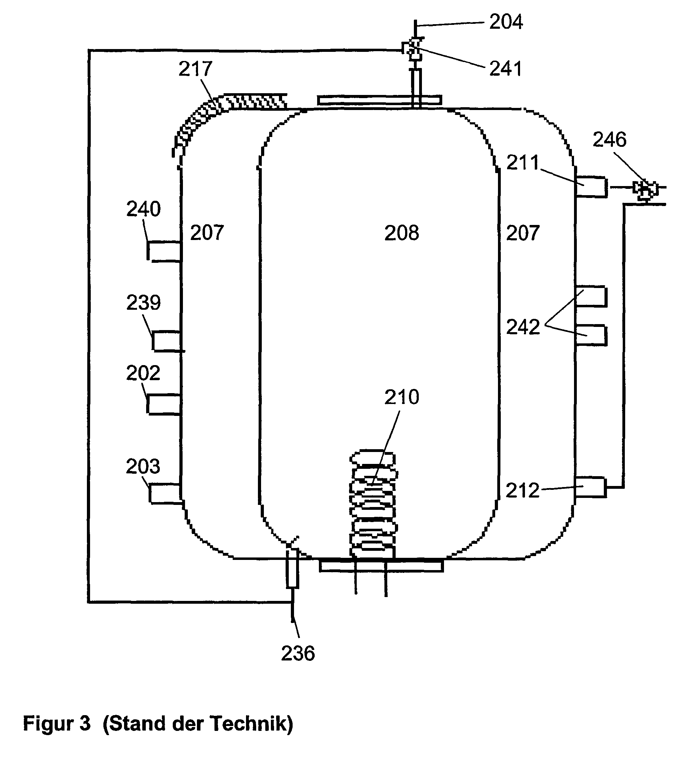

Figur 3 zeigt schematisch einen Querschnitt durch einen Doppelmantelwärmespeicher. Zur Wärmebeladung des mit Heizungswasser gefüllten äußeren Volumens 207 sind Vor- und Rücklaufanschlüsse für eine Wärmepumpe (239, 240), eine Solaranlage (202, 203), weitere optionale Wärmequellen 242, sowie für eine Verbrennungsheizung bzw. für das Gebäudeheizungssystem (211, 212) vorgesehen. Das äußere Volumen wird von einer Dämmschicht 217 gegen Wärmeverluste geschützt. Das innere Volumen 208 weist einen Frischwasseranschluss 236, einen Brauchwasseranschluss 204 sowie als zusätzliche Wärmequelle zur direkten Brauchwassererwärmung einen Wärmetauscher 210 auf. Damit kann das innere und das äußere Volumen unabhängigen erwärmt werden. Das Brauchwasser kann daher vorübergehend auch wärmer sein als das Heizungswasser im Außenvolumen. Allerdings findet in diesem Fall durch den Wärmeaustausch über die wärmeleitende Wand zwischen innerem und äußerem Volumen eine Angleichung der Temperaturen statt. Zur Regelung der Brauchwassertemperatur ist vor der Einleitung des im inneren Volumen erwärmten Brauchwassers in das Brauchwassersystem 204, ein Mischventil 241 (Verbrühungsschutzventil) vorgesehen, vermittels dem das erwärmte Brauchwasser mit Frischwasser entsprechend vermischt wird.

Wird das Außenvolumen eines Doppelmantelwärmespeichers über eine Sonnenenergienanlage erwärmt, so können die Temperaturen im Außenvolumen sehr hoch (bspw. bis 90°C) werden, was eine entsprechende Erwärmung des Brauchwassers bedingt. Nachteilig ist, dass derartig hohe Temperaturen wiederum zu Verkalkungsproblemen führen und eine entsprechende Verbrühungsschutzschaltung im Brauchwassersystem erforderlich machen.

Auch ein Einsatz einer Wärmepumpe in Verbindung mit dem beschriebenen Doppelmantelwärmespeichers ist nicht optimal. Zwar wird durch die Wärmepumpe im äußeren Volumen des Doppelmantelspeichers die Heizungsflüssigkeit typischerweise auf Temperaturen von 35 - 50 °C erwärmt, was eine optimale Anpassung der Heizung an moderne Niedrigtemperaturheizungen (bspw. Fußbodenheizung) darstellt. Allerdings muss die Brauchwassertemperatur im inneren Volumen wegen der Legionellenproblematik zumindest zeitweise auf Temperaturen von über 60°C geheizt werden. Diese sich widersprechenden Anforderungen können von dem Doppelmantelwärmespeicher nicht ohne zusätzlichen Aufwand an Energie und Regelungstechnik erfüllt werden (bspw. für die direkte zusätzliche Erwärmung des Brauchwassers).

Doppelmantelwärmespeicher weisen zusammenfassend folgende vorteilhaften Eigenschaften und Merkmale auf:
- Geringe Anschaffungskosten.
- Brauchwasser steht sofort in ausreichender Menge zur Verfügung.
- Geringer Energieverlust bei der Brauchwassererwärmung.
- Das Brauchwasser kann mit einer unabhängigen Wärmequelle (z.B. Kondensator einer Wärmepumpe) erwärmt werden.
- Es ist kein externer Wärmespeicher erforderlich.
- Nahezu kein Druckverlust im Brauchwassersystem.

Doppelmantelspeicher weisen folgende nachteiligen Eigenschaften und Merkmale auf:
- Die Brauchwassertemperatur ist direkt von der Temperatur des Außenspeichermediums (Heizungsflüssigkeit) abhängig und umgekehrt, d.h. eine hohe Temperatur des Außenspeichermediums resultiert in einer hohen Brauchwassertemperatur und umgekehrt.
- Hohe Brauchwassertemperaturen bedingen eine erhöhte Verkalkung des Brauchwassersystems.
- Bei Nutzung einer Sonnenergieanlage ist ein Verbrühungsschutzventil erforderlich.
- Das Brauchwassers muss wenigstens zeitweise eine Temperatur über 60°C erreichen um Legionellenbildung zu verhindern.
- Die Temperatur des Außenspeichermediums (Heizungsflüssigkeit) muss für ein Niedertemperaturheizungssystem auf ca. 35° C gemischt werden, was zu einem erheblichen Exergieverlust führt.

Aus dem Dokument US-A-4527618 ist ein Wärmespeicher bekannt, der zwei getrennt voneinander jeweils mit einem Medium befüllbaren und durchströmbaren Volumen (16,42) aufweist, wobei zwischen dem ersten und zweiten Volumen ein weiteres mit einem Fluid befüllbares und entleerbares Volumen (30) vorgesehen ist. Diese drei Volumen (16,30,42) stehen jeweils über Verbindungsleitungen (36,46) sowie diverse weitere Verbindungsleitungen miteinander in Stoffaustausch. Der Wassertank (30) übernimmt keine Schaltfunktion und erlaubt nicht die Einstellung des thermischen Kontaktes zwischen dem ersten und zweiten Volumen.

Wie diese Ausführungen zeigen, stellen Solaranlagen und Wärmepumpen an Wärmespeicher unterschiedliche, zum Teil gegensätzliche Anforderungen. Diese Probleme treten insbesondere dann hervor, wenn in einem Gebäudeheizungssystem zur Wärmeerzeugung Solaranlagen und Wärmepumpen kombiniert betrieben werden. Die heute in diesem Zusammenhang bekannten Wärmespeicher weisen die beschriebenen Nachteile auf. Zusammenfassend kann daher festgestellt werden, dass derzeit kein optimales Wärmespeichersystem für Heizungssysteme bekannt ist, in dem Solaranlagen (hohe Speichertemperaturen im Sommer, großes Speichervolumen) und Wärmepumpen (niedrigere Speichertemperaturen, eher kleine Speichervolumen) eingesetzt werden.

### Darstellung der Erfindung

Ausgehend von dem bekannten Stand der Technik liegt der Erfindung die Aufgabe zugrunde einen Wärmespeicher für ein Heizungssystem derart anzugeben, dass der Wärmespeicher in Verbindung mit unterschiedlichen Wärmequellen, insbesondere mit einer Solaranlage und einer Wärmepumpe, betreibbar ist und dabei die beschriebenen Nachteile heute verfügbarer Wärmespeicher vermieden werden. Der Wärmespeicher soll insbesondere dazu beitragen, den Gesamtenergieaufwand des Heizungssystems gegenüber heute verfügbaren Lösungen zu reduzieren. Darüber hinaus soll der Wärmespeicher einfach konstruiert, günstig herstellbar und einfach und zuverlässig betreibbar sein.

Die Aufgabe wird mit dem Wärmespeicher gemäß Patentanspruch 1 gelöst. In Patentanspruch 20 wird ein Verfahren zum Betreiben eines Wärmetauschers angegeben, der für eine Brauch- und Heizungswassererwärmung in einem Gebäude eingesetzt wird. Vorteilhafte Ausgestaltungen sind Gegenstand der Unteransprüche oder lassen sich der nachfolgenden Beschreibung sowie den Ausführungsbeispielen entnehmen.

Erfindungsgemäß ist ein Wärmespeicher mit wenigstens einem ersten und einem zweiten, getrennt voneinander jeweils mit einem Medium befüllbaren und/oder von einem Medium durchströmbaren Volumen, die in thermischen Kontakt stehen oder bringbar sind, derart ausgebildet, dass zwischen dem ersten und dem zweiten Volumen wenigstens ein weiteres mit einem Fluid (Gas und/oder Flüssigkeit) befüllbares und entleerbares Volumen, ein so genanntes schaltbares Volumen, vorgesehen ist, das mit dem ersten und zweiten Volumen ausschließlich in thermischem Kontakt steht.

Das schaltbare Volumen ist dabei mit einem Fluid kontrolliert befüll- oder entleerbar und kann in vorteilhafter Weise mittels einer Unterdruckquelle weitgehend luftleer gepumpt werden. Durch das kontrolliertes Befüllen oder Entleeren bzw. Evakuieren des schaltbaren Volumens wird der thermische Kontakt zwischen dem ersten und zweiten Volumen bzw. den darin befindlichen Medien (Gasen oder Flüssigkeiten) gezielt beeinflusst, bzw. eingestellt.

Soll das schaltbare Volumen eine hohe Wärmeleitfähigkeit aufweisen, um so einen maximalen Wärmeübergang zwischen dem ersten und dem zweiten Volumen zu ermöglichen, wird bspw. ein thermisch gut leitendes Fluid in das schaltbare Volumen eingeleitet. Soll hingegen möglichst keine Wärmeleitung zwischen dem ersten und zweiten Volumen erfolgen, so wird das Fluid aus dem schaltbaren Volumen abgeleitet und anschließend das schaltbare Volumen evakuiert. Um Zwischenwerte der Wärmeleitung einzustellen ist eine entsprechende Teilbefüllung des schaltbaren Volumen erforderlich. Dabei erfolgt Wärmeleitung in dem Bereich der noch mit Fluid gefüllt ist und eine reduzierte Wärmeleitung in dem darüber liegenden Volumen. Ist das schaltbare Volumen vollständig fluidfrei und bspw. nur noch mit einem Gas (Luft) gefüllt, so kann die Isolationswirkung durch Evakuierung, d.h. durch abpumpen des Luft, noch erhöht werden. Um unterschiedliche maximale Wärmeleitfähigkeiten des schaltbaren Volumens zu erreichen, können unterschiedliche Fluide (Gase oder Flüssigkeiten) mit verschiedenen Wärmeleitfähigkeitseigenschaften eingesetzt werden.

Das schaltbare Volumen kann aus einem einzelnen Hohlraum oder mehreren miteinander verbundenen Teilhohlräumen, bspw. einzelnen miteinander kommunizierenden Kanälen, bestehen. Das schaltbare Volumen kann die unterschiedlichsten Formgebungen aufweisen, bspw. rohrförmig, paneelartig usw.. Es kann innen liegende Strukturen oder Abgrenzungen aufweisen, poröses, grob oder fein strukturiertes Material enthalten oder es kann Körper mit einstellbar veränderbarem Körpervolumen enthalten, die bspw. durch eine Vergrößerung des Körpervolumens das Medium aus dem schaltbaren Volumen drängen.

Das schaltbare Volumen ist von einer Wand oder einem Gehäuse aus zumindest gut Wärme leitendem Material umgeben und zumindest mit einer Öffnung verbunden, so dass das schaltbare Volumen darüber mit einem Medium befüll- oder entleerbar oder evakuierbar ist. Um eine Evakuierung zu realisieren, muss das schaltbare Volumen gasdicht verschließbar sein. Je nach technischer Realisierung und Regelung des Befüll-, Entleerungs-, oder Evakuierungsvorgangs sowie der Konstruktion des schaltbaren Volumens können weitere Öffnungen, Ventile, Sensoren und Aktoren vorgesehen sein. Das schaltbare Volumen kann dementsprechend mit Pumpen, Leitungen, Ausgleichsbehältern, Reservoirbehältern oder Steuerungsgeräten verbunden sein. Zwischen dem ersten und dem zweiten Volumen können auch mehrere jeweils einzeln befüll-, entleer-, und/oder evakuierbare schaltbare Volumen angeordnet sein.

Damit das oder die schaltbaren Volumina die ihnen zugedachte Funktion ausführen können, nämlich die Wärmleitung zwischen dem ersten und dem zweiten Volumen eines Wärmespeichers gezielt einzustellen bzw. zu regeln, ist eine entsprechende Steuerung der Befüllung, der Entleerung bzw. der Evakuierung erforderlich. Diese Steuerung kann manuell oder automatisch erfolgen. Vorteilhafterweise wird hierfür ein Steuergerät vorgesehen, das abhängig von manuellen Eingaben, vorgegebenen Parametern oder erfassten Sensordaten die Befüllung oder die Entleerung bzw. Evakuierung des schaltbaren Volumens steuert.

Mit dem erfindungsgemäßen Wärmespeicher ist es somit möglich, den Wärmeübergang zwischen dem ersten Volumen, bspw. dem Heizwasserreservoir, und dem zweiten Volumen, bspw. dem Brauchwasserreservoir, variabel einzustellen, so dass je nach Betriebssituation des Heizungssystems, insbesondere je nach aktiver Wärmequelle, einerseits die Wärmespeicherfunktion für das Heizungssystem ohne nennenswerte Energieverluste erfüllt wird und zudem auch sichergestellt wird, dass das Brauchwasser zur Vermeidung der Legionellenproblematik zumindest zeitweise auf Temperaturen über 60°C erhitzt wird.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben.

Es zeigen :
- Figur 1: Schematische Darstellung eines Heizungssystems mit Solarwärmetauscher, Solaranlage, Heizungsanlage und externer Wärmetauscher zur Brauchwassererwärmung nach dem Durchlaufprinzip (Stand der Technik)
- Figuren 2a, 2b: Schematischer Aufbau eines Solarwärmespeichers (Stand der Technik)
- Figur 3: Schematischer Aufbau eines Doppelmantelwärmespeichers (Stand der Technik)
- Figuren 4a - 4c: Darstellungen verschiedener grundlegender Ausführungsformen des erfindungsgemäßen Wärmespeichers
- Figuren 5a, 5b: Darstellung verschiedener Ausführungsformen eines Doppelmantelwärmespeichers mit schaltbarem Volumen
- Figur 6: Doppelmantelwärmespeicher mit schaltbarem Volumen der im Verbund mit einer Solaranlage und einer Wärmepumpe betrieben wird

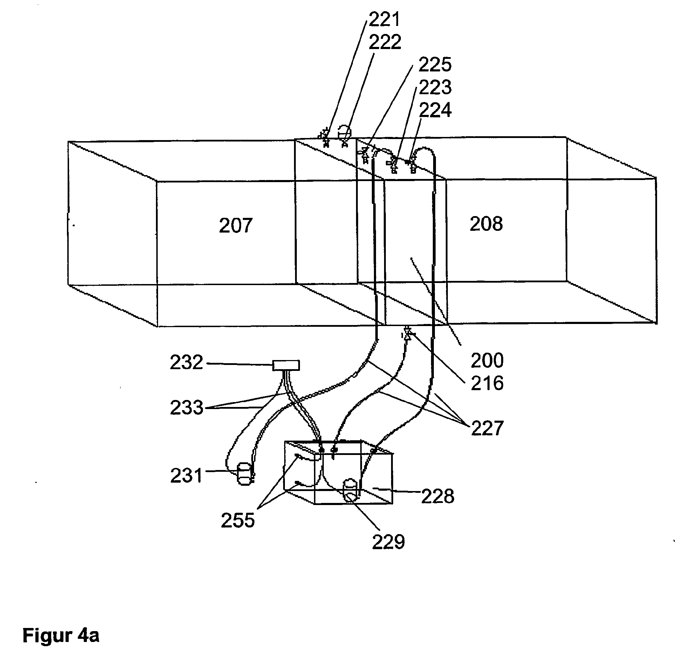

Die Figur 4a zeigt eine grundlegende Ausführungsform des erfindungsgemäßen Wärmespeichers. Der Wärmespeicher besteht aus zwei, getrennt voneinander mit einem Medium befüllbaren bzw. durchströmbaren Volumen 207 und 208, und einem weiteren dazwischen angeordneten, mit einem Fluid (Gase oder Flüssigkeiten) befüll- oder entleerbaren bzw. evakuierbaren Volumen 200, das so genannte schaltbare Volumen, das mit den zwei Volumen 207 und 208 in thermischem Kontakt steht. Neben Flüssigkeiten können als Medium natürlich auch Gase in das schaltbare Volumen ein- und ausgeleitet oder darin freigesetzt und wieder resorbiert werden.

Der Wärmeübergang zwischen den Volumen 207 und 208 wird in Figur 4a durch entsprechende Befüllung, Entleerung oder durch Evakuierung des schaltbaren Volumens 200 variiert. Hierfür ist das schaltbare Volumen 200 über entsprechende Schlauchleitungen 227 mit einer Vakuumpumpe 231, einem Fluidreservoir 228 und mit einer Förderpumpe 229 verbunden. Bei anderen Ausführungsformen kann die Vakuumpumpe durch Umschaltung auch zur Drucklufterzeugung verwendet werden. Die Schlauchleitungen 227 können auch durch Rohre ersetzt werden, damit verringert sich der Druckverlust im Leitungssystem. An dem schaltbaren Volumen 200 ist ein Sicherheitsüberdruckventil 221, ein Ausdehnungsgefäß 222, ein Entlüftungsventil 225, ein mit der Förderpumpe 229 verbundenes Befüllungsventil 224, ein mit der Vakuumpumpe 231 verbundenes Vakuumventil 223 und ein mit dem Fluidreservoir 228 verbundenes Entleerungsventil 216 vorgesehen. Je nach Ausführungsform und technischer Realisierung sind jedoch nicht alle aufgezählten Anschlüsse oder Ventile erforderlich. So kann bspw. bei einer drucklosen Betriebsvariante des schaltbaren Volumens das Ausdehnungsgefäß 222 und das Sicherheitsventil 221 eingespart werden. Vorzugsweise sind alle Ventile elektrisch ansteuerbar und als Magnetventile ausgebildet.

Zur Steuerung des Befüll-, Entleerungs- oder Evakuierungsvorgangs ist eine Steuereinheit 232 vorgesehen, die über elektrische Leitungen 233 mit der Förderpumpe 229, der Vakuumpumpe 231, den Ventilen (nicht dargestellt) sowie zwei Sensoren 255 zur Erfassung des Pegelstandes im Fluidreservoir 228 verbunden ist. Die Steuereinheit ermöglicht, das Zusammenwirken der mit dem schaltbaren Volumen verbundenen Komponenten so zu steuern, dass die Wärmeleitungseigenschaften des schaltbaren Volumens 200 durch Befüllen, Entleeren oder Evakuieren entsprechend einer Vorgabe definiert eingestellt werden. Wird dabei das schaltbare Volumen 200 vollständig evakuiert, dann wirkt es als Wärmeisolator; es findet kein, bzw. nur ein sehr geringer Wärmeaustausch zwischen den Volumen 207 und 208 statt. Wird es hingegen vollständig mit einem gut wärmeleitenden Fluid gefüllt, so wird die maximale Wärmeleitung zwischen den Volumen 207 und 208 erreicht. Durch teilweises Entleeren können Zwischenwerte der Wärmeleitfähigkeit eingestellt werden.

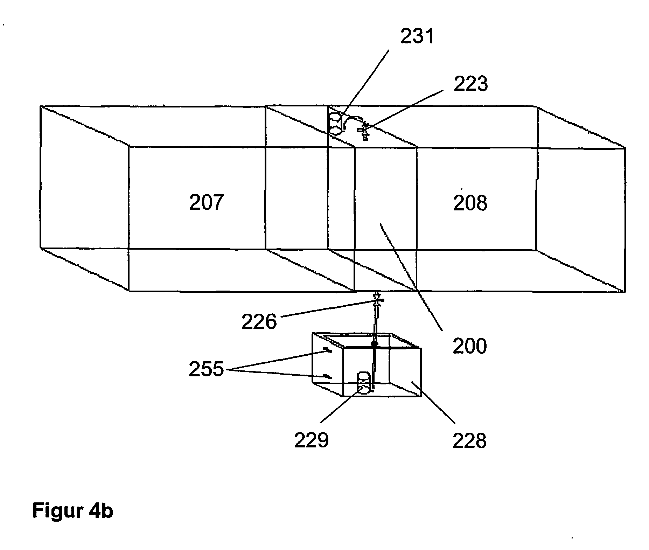

Figur 4b zeigt ebenfalls eine grundlegende Ausführungsform des erfindungsgemäßen Wärmespeichers mit einem vereinfachten System zur Befüllung-Entleerung bzw. Evakuierung des schaltbaren Volumens. Im Gegensatz zu Figur 4a erfolgt in der in Figur 4b dargestellten Ausführungsform die Befüllung und die Entleerung des schaltbaren Volumens 200 über nur ein Ventil 226. Ebenso erfüllt das mit der Vakuumpumpe 231 verbundene Vakuumventil 223 zusätzlich die für das Entleeren des schaltbaren Volumens 200 erforderliche Belüftungsfunktion. Damit können gegenüber dem in 4a beschriebenen System eine Schlauchleitung sowie zwei Ventile eingespart werden.

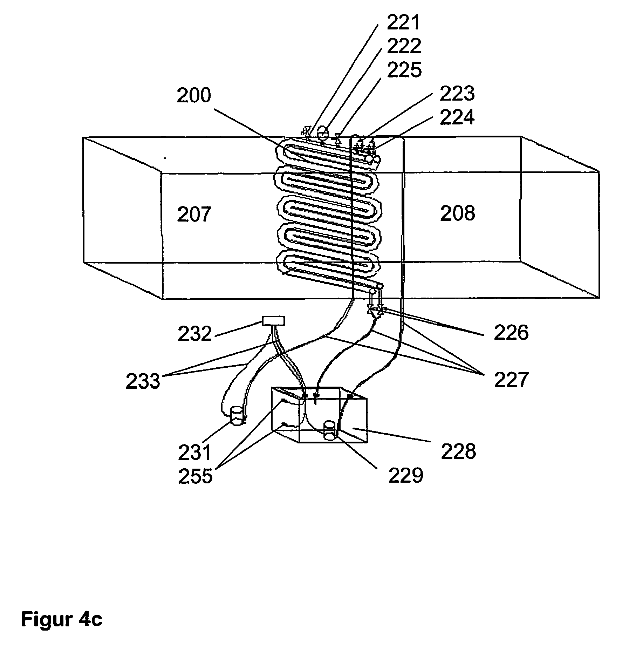

Der Figur 4c ist eine weiter Ausführungsform des erfindungsgemäßen Wärmespeicher zu entnehmen, der ein schaltbaren Volumen 200 in Form eines Rohrsystems, bestehend aus zwei meanderförmig gebogenen, getrennten Rohren aufweist. Jedes Rohr ist separat befüll-, entleer- oder evakuierbar und kann deshalb über folgende Komponenten verfügen: Entleerungsventil 226, ein Befüllungsventil 224, ein Vakuumventil 223, ein Entlüftungsventil 225, eine Überdrucksicherheitsventil 221 und ein Ausdehnungsgefäß 222. Beide Rohre sind so miteinander verbunden und zwischen den Volumen 207 und 208 angeordnet, dass das Volumen 207 und das Volumen 208 stoffdicht getrennt ist und beide Volumen über das Rohrsystem in thermischen Kontakt treten können.

Das Prinzip des erfindungsgemäßen Wärmespeichers mit zumindest einem schaltbaren Volumen kann auch auf den bekannten Doppelmantelwärmespeicher übertragen werden. Dabei wird zwischen dem äußeren Speichervolumen und dem inneren Speichervolumen anstelle der bisher bekannten einfachen sehr gut wärmeleitenden Wand zumindest ein schaltbares Volumen angeordnet, das das innere Volumen umschließt. Wie vorstehend beschrieben, kann durch das schaltbare Volumen die Wärmeleitung zwischen äußerem und inneren Volumen variiert, bzw. kontrolliert eingestellt werden. Ein Wärmespeicher kann jedoch ebenso mehr als nur zwei Volumina (Doppelmantelwärmespeicher) aufweisen. So ist bspw. ein Wärmespeicher bestehend aus drei Volumina denkbar, bei dem ein inneres Volumen von einem mittleren Volumen, und dieses von einem äußeren Volumen umschlossen wird, wobei die drei Volumina getrennt voneinander jeweils mit einem Medium befüllbar oder durchströmbar sind und jeweils zwischen den Volumina ein schaltbares Volumen angeordnet ist, so dass ein thermischer Kontakt zwischen den Volumina nur über des jeweilige schaltbare Volumen erfolgt.

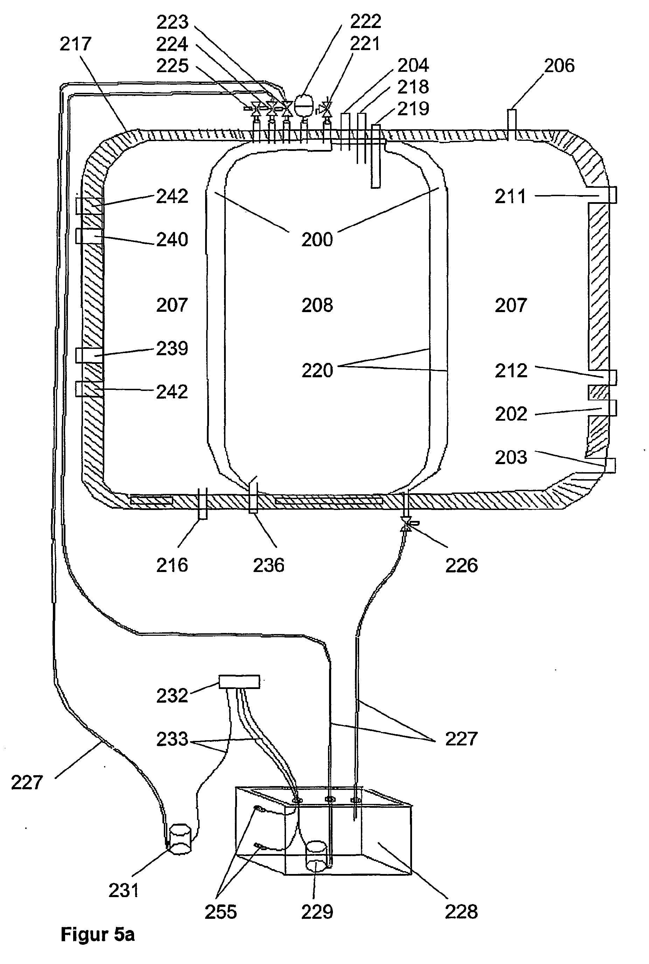

Figur 5a zeigt einen solchen Doppelmantelwärmespeicher mit einem inneren Volumen 208 und einem äußeren Volumen 207. Das innere Volumen ist von einem schaltbaren Volumen 200 umgeben, das aus einem von zwei Wänden 220 begrenzten Volumen besteht. Das schaltbare Volumen 200 seinerseits wird von dem äußeren Volumen 208 umgeben. Zur Befüllung, Entleerung, bzw. zur Evakuierung weist das schaltbare Volumen 200 die in Figur 4a beschriebenen Anschlüsse, Ventile und Verbindungen zu einem Fluidreservoir 228, einer Fluidförderpumpe 229 sowie zu einer Vakuumpumpe 231 auf. Auf die Ausführungen zu Figur 4a wird an dieser Stelle verwiesen. Das innere Volumen 208 dient der Brauchwassererwärmung und weist einen Kaltwasseranschluss 236, einen Brauchwasseranschluss 204, eine Opferanode 219 sowie eine zusätzliche Zirkulationsleitung 218 auf. Die Erwärmung des Brauchwassers erfolgt durch Wärmeübergang vom äußeren Volumen 207 über das schaltbare Volumen 200 auf das innere Volumen 208. Das Kaltwasser strömt dabei von unten in das innere Volumen und tritt nach dessen Erwärmung durch den oben liegenden Brauchwasseranschluss in das Brauchwassersystem aus. Das äußere Volumen wird von Heizungswasser durchströmt und ist jeweils über Vor- und Rücklaufleitungen mit einer Wärmepumpe (239, 240), einer Verbrennungsheizung (211, 212), einer Solaranlage (202, 203), sowie optional mit weiteren Wärmequellen 242 verbunden. Zu Wartungszwecken und zur Entlüftung der Anlage ist im äußeren Volumen ein Entlüftungsventil 206 bzw. ein Entleerungsventil 216 vorgesehen. Zudem wird das äußere Volumen durch eine Außenisolierung 217 gegen Wärme- bzw. Strahlungsverluste geschützt.

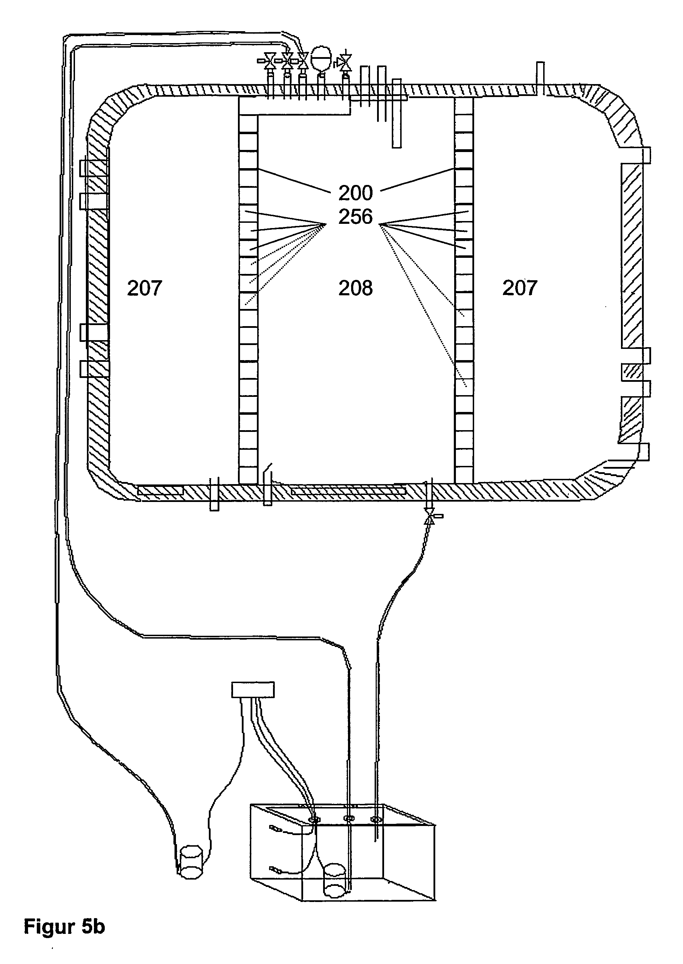

Die Ausführungsform des in Figur 5b dargestellten Doppelmantelwärmespeichers unterscheidet sich von der in Figur 5a gezeigten nur dadurch, dass das schaltbare Volumen 200 anstelle aus einem von zwei Wänden 220 begrenzten Volumen, aus einem Kanal besteht, der das innere Volumen 207 in Art einer helikalen Wicklung 256 mit mehreren Windungen stoffdicht umgibt. Natürlich sind auch andere Ausführungsformen mit mehreren jeweils einzeln ansteuerbaren schaltbaren Volumen denkbar, bspw. übereinander liegende, stoffdicht verfügte einzelne Ringkanäle, Trennkanäle etc.. Durch mehrere solcher vertikal geschichteter, einzeln ansteuerbarer Kanäle kann im Wärmespeicher eine Temperaturschichtung erzeugt werden. Wesentlich dabei ist, dass durch das oder die miteinander verfügten schaltbaren Volumen das äußere Volumen stoffdicht vom inneren Volumen getrennt wird, und dass das oder die schaltbaren Volumina stoffdicht gegen die Medien im inneren und äußeren Volumen abgeschlossen sind.

Der vorstehend beschriebene Doppelwärmespeicher unterscheidet sich von den bisher bekannten Doppelwärmespeichern dadurch, dass der Wärmeübergang zwischen äußerem und innerem Volumen nunmehr kontrolliert einstellbar ist. Der Wärmeübergang kann dabei grundsätzlich zwischen einer maximalen und einer geringen bis fast keiner Wärmeleitung variiert und gezielt eingestellt werden.

Eine maximale Wärmeleitung zwischen äußerem und innerem Volumen ist typischerweise erforderlich, wenn das äußere, wärmere Medium (Heizungswasser) das innere, kältere Medium (Brauchwasser) erwärmen soll. Um die maximale Wärmeleitung zu erzeugen wird das schaltbare Volumen vollständig mit wärmeleitendem Fluid gefüllt. Im Behälter 228 (vgl. Figur 5a) befindet sich ein wärmeleitendes Fluid (z. B. Wasser). Dieses Fluid wird über die Pumpe 229 durch einen Schlauch 227 über das offen stehende Befüllungsmagnetventil 224 in das schaltbare Volumen 200 gepumpt. Dabei wird das Entlüftungsventil 225 geöffnet. Das Entleerungsventil 226 ist geschlossen. Der schaltbare Volumen füllt sich mit Fluid, die Luft kann über das Entlüftungsventil 225 entweichen. Ist das schaltbare Volumen vollständig mit dem wärmeleitenden Fluid gefüllt, so schließt das Entlüftungsventil 225. Damit wird eine maximale Wärmeleitung zwischen äußerem und inneren Volumen erzeugt. Die maximal erzeugbare Wärmeleitung hängt natürlich von den Wärmeleitungseigenschaften des in das schaltbare Volumen eingebrachten Mediums ab und kann daher durch Benutzung anderer Medien variiert werden. Das Ausdehnungsgefäß 222 kann die Ausdehnung des wärmeleitenden Mediums kompensieren. Ein Sicherheitsventil 221 ist zur Sicherheit gegen Überdruck im schaltbaren Volumen vorgesehen.

Eine minimale Wärmeleitung bzw. eine thermische Isolierung zwischen äußerem und innerem Volumen, ist hingegen typischerweise erforderlich, wenn die Temperatur des inneren Volumens 208 nicht auf eine höhere Temperatur des äußeren Volumens 207 ansteigen soll, oder umgekehrt oder eine höhere Temperatur des inneren Volumens keine Erwärmung des äußeren Volumens bewirken soll. Hierfür werden das Entleerungsventil 226 und das Entlüftungsventil 225 geöffnet, das wärmeleitende Fluid fließ zurück in den Auffangbehälter 228. Dies kann aufgrund der Gravitationswirkung erfolgen, sofern der Fluidbehälter unter der schaltbaren Volumen angeordnet ist oder das Fluid wird mittels einer Pumpe (nicht dargestellt) abgesaugt. Ist der Auffangbehälter 228 voll bzw. enthält das schaltbare Volumen kein Fluid mehr, so wird das Entleerungsventil 226 und das Entlüftungsventil 225 wieder geschlossen. Das Vakuumventil 223 wird geöffnet und die Vakuumpumpe 231 eingeschaltet. Im schaltbaren Volumen 200 wird enthaltenes Gas abgesaugt und ein Vakuum erzeugt. Dadurch ergibt sich eine reduzierte Wärmeleitfähigkeit durch das schaltbaren Volumen und mithin eine thermische Isolierung zwischen den Speichermedien im äußeren und inneren Volumen.

Eine Regelung und Einstellung der Wärmeleitung zwischen äußerem und inneren Volumen ist durch folgende Techniken möglich:
a) Sofern ein schaltbares Volumen zwischen äußerem und innerem Volumen angeordnet ist: durch gezieltes Befüllen, Entleeren und Evakuieren des schaltbaren Volumens.
b) Sofern mehrere schaltbare Volumen zwischen äußerem und innerem Volumen angeordnet sind, bspw. mehrere Kanäle etc.: gezieltes koordiniertes Befüllen, Entleeren und Evakuieren einzelner schaltbarer Volumina.
c) Befindet sich innerhalb des schaltbaren Volumens ein Körper mit veränderlichem Körpervolumen, bspw. ein aufblasbarer Schlauch, so kann durch gezielte Vergrößerung des Körpervolumens das wärmeleitende Fluid aus dem schaltbaren Volumen verdrängt werden. Im Falle eines Schlauchs kann das Aufblasen in kleinen Schritten erfolgen und so letztlich eine Feineinstellung der Wärmeleitfähigkeit des schaltbaren Volumens ermöglichen.

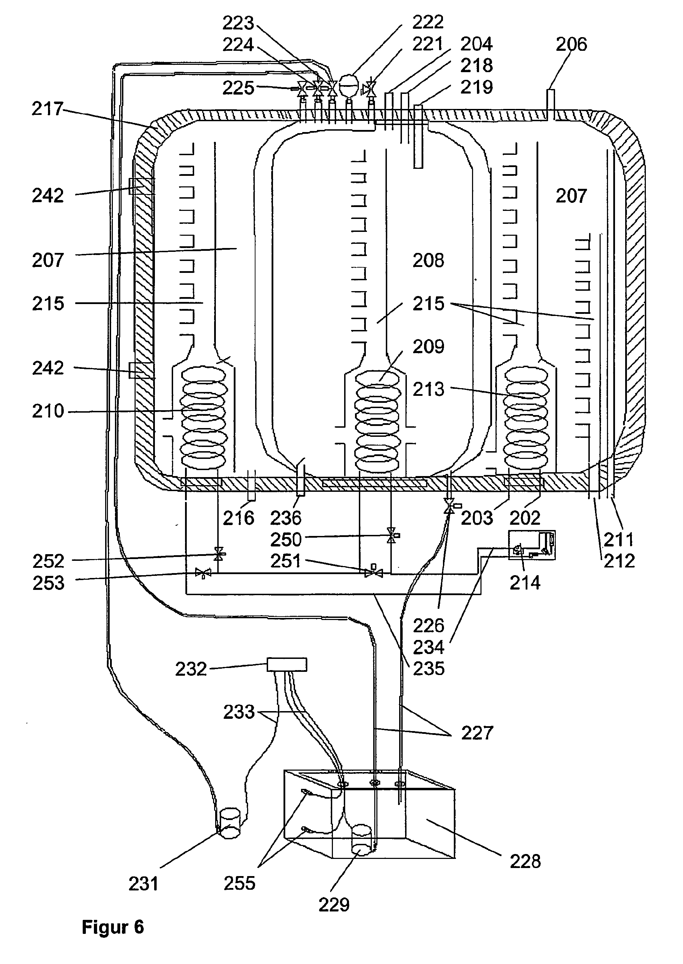

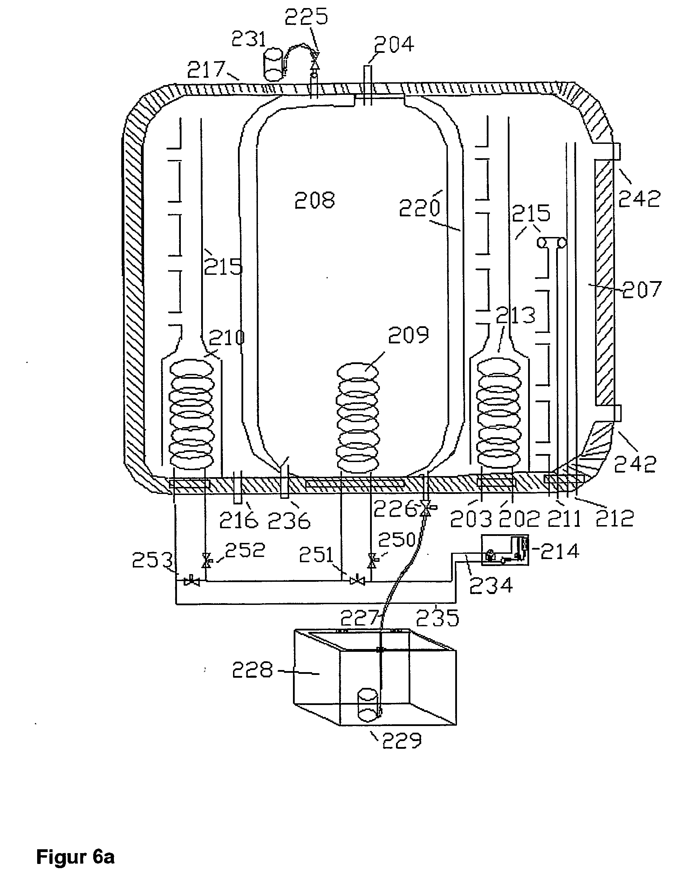

Figur 6 zeigt einen Doppelmantelwärmespeicher und seine Verschaltung mit einer Wärmepumpe 214. Im Gegensatz zur Figur 5a wird hier ein Ausführungsbeispiel des Doppelmantelwärmespeichers gezeigt, bei dem das äußere Volumen 207 zur Wärmebeladung des darin zirkulierenden Heizungswassers einen in einen Schichtlader 215 integrierte Wärmetauscher 210 vorsieht, der über Vor- und Rücklaufleitungen mit einer Wärmepumpe 214 verbunden ist, einen weiteren in einen Schichtlader integrierten Wärmetauscher 213 vorsieht, der über Vor- und Rücklaufleitungen (202, 203) mit einer Solaranlage, sowie über Vor- und Rücklaufleitungen (211, 212) mit einem Heizungssystem verbunden ist. Auch im inneren Speichervolumen 208 ist ein Wärmetauscher 209 vorgesehen, der mit der Wärmepumpe 214 über Leitungen verbunden ist. In weiteren Ausführungsformen ist denkbar, dass die Wärmetauscher ohne Schichtlader eingesetzt werden, oder dass in der Solaranlage ebenfalls Heizungswasser zirkuliert, und daher der Vor- und Rücklauf der Solaranlage direkt mit dem äußere Volumen des Doppelmantelwärmespeichers verbunden sind.

Die Wärmepumpe 214 weist eine Heißgasleitung 234 auf mit der die von der Wärmepumpe erzeugte Wärmeenergie den Kondensator-Wärmetauschern 209 und 210 zugeführt werden kann. Die in den Verbindungsleitungen vorgesehenen Ventile 250, 251, 252 und 253 ermöglichen eine Steuerung der Beschickung der Wärmetauscher derart, dass das Heißgas entweder jeweils einen der beiden Kondensator-Wärmetauscher 209 oder 210 einzeln durchströmt, oder zuerst den Wärmetauscher 209 und anschließend den Wärmetauscher 210 durchströmt. Die Ventile können dabei als marktübliche Dreiwege- oder Absperrventile ausgebildet sein. Das Heißgas gibt im jeweiligen Wärmetauscher (209, 210) seine Wärmeenergie an das Medium außerhalb ab und kondensiert dabei. Das kondensierte Heißgas wird in einem Kreislauf über die Flüssigleitung 235 wieder der Wärmepumpe 214 zugeführt.
Figur 6a unterscheidet sich von Figur 6 durch ein vereinfachtes System zur Befüllung- Entleerung bzw. Evakuierung des schaltbaren Volumens, analog dem in Figur 4b beschriebenen System. Dadurch kann die Befüllpumpe 229 wegfallen, weil durch das Evakuieren und das Offenlassen des Ventils 226 das wärmeleitende Fluid durch den atmosphärischen Druck in das schaltbare Volumen gedrückt wird.

Wird ein derartiger Doppelmantelwärmespeicher einem Heizungssystem mit Sonnenergieanlage und Wärmepumpe eingesetzt, so erfolgt die beschriebene Ansteuerung des integrierten schaltbaren Volumens abhängig von der jeweils aktiven Wärmequelle und/ oder von den aktuellen Temperaturen im inneren und äußeren Volumen. Dabei kann grundsätzlich zwischen Sommerbetrieb und Winterbetrieb unterschieden werden.

Der typische Sommerbetrieb wird dadurch gekennzeichnet, dass die Solaranlage einen hohen solaren Wärmeertrag liefert, der das äußere Volumen (Heizungswasser) entsprechend mit Wärmeenergie speist und die Temperatur im äußeren Volumen entsprechend hoch gehalten werden kann. Die Wärmepumpe ist während des Sommerbetriebes nicht in Betrieb. Die Temperatur im inneren Volumen 208 (Brauchwasser) wird über eine entsprechende Ansteuerung des schaltbaren Volumens derart geregelt, dass einerseits der Kalkausfall vermieden und andererseits durch zeitweise Erwärmung auf über 60°C die Legionellenbildung verhindert werden. Dadurch kann auch das Verbrühungsschutzventil 241entfallen.

Während des typischen Winterbetriebs ist statt der Solaranlage nur die Wärmepumpe 214 in Betrieb. Durch die Kondensator-Wärmetauscher 209 und 210 ist dabei eine jeweilige direkte und gezielte Erwärmung des Brauchwassers und/oder des Heizungswassers möglich. Dabei kann, durch entsprechende Auslegung und Verschaltung der Kondensator-Wärmetauscher 209 und 210, die Enthitzung am Kondensator-Wärmetauscher 209 für die Erwärmung des Brauchwassers verwendet werden. Die Brauchwassertemperatur kann in diesem Fall über der Kondensationstemperatur im Kondensator-Wärmetauscher 209 liegen und Werte über 60°C erreichen. Für den Einsatz von Niedertemperaturheizungen (z.B. Fußbodenheizungen) wird das äußere Volumen während des Winterbetriebes über den Kondensator-Wärmetauscher 210 auf niedrige Temperaturen, bspw. 35 - 45°C, erwärmt, während aufgrund der Legionellenproblematik das innere Volumen durch den Kondensator-Wärmetauscher 209 zeitweise auf über 60°C erwärmt werden kann. Damit kein unerwünschter Temperaturausgleich zwischen dem Heizungswasser im äußeren Volumen und dem Brauchwasser im inneren Volumen stattfindet, muss der Wärmeübergang zwischen äußerem und inneren Volumen entsprechend geregelt werden. Das schaltbare Volumen, d.h. letztlich die Wärmeübergang zwischen äußerem und inneren Volumen, wird daher abhängig vom jeweiligen Wärmeeintrag über die Kondensator-Wärmetauscher 209 und 210 derart angesteuert, dass im äußeren Volumen eine für die Niedertemperaturheizung erforderliche konstante Temperatur aufrechterhalten wird.

Ein gleichzeitiger Betrieb von Solaranlage und Wärmepumpe ist natürlich ebenfalls möglich und in Zeiten geringer Sonneneinstrahlung bspw. in Schlechtwetterperioden im Sommer, auch sinnvoll. Hierfür kann ggf. eine aufwändigere Ansteuerung des schaltbaren Volumens erforderlich sein.

Durch den Einsatz eines derartigen Doppelmantelwärmespeichers ist im Winterbetrieb eine niedrige Temperatur im Außenspeicher realisierbar, dadurch ist die Oberflächentemperatur des Wärmespeichers bzw. sind die Wärmeleitungs-Konvektions- und Strahlungsverluste gering. Die Effizienz des Wärmespeichers wird dadurch wesentlich erhöht. Die Leistungszahl einer an das äußere Volumen zur Wärmeeinleitung angeschlossenen Wärmepumpe kann ebenfalls durch die im Mittel niedrigeren Temperaturen im Außenspeicher (Innenspeicher zeitweise über 60°C, Außenspeicher 35°C) im Vergleich zu bekannten Systemen wesentlich erhöht werden. Des Weiteren kann das innere Volumen (Brauchwasser) durch entsprechende Schaltung der Wärmetauscher 209 und 210, bspw. im Rahmen einer so genannten "Zweikreisschaltung", bei der von einem Heizungskondensator die Überhitzung für den Brauchwasserkondensators genutzt wird, das Brauchwasser, über die Kondensationstemperatur im Kondensatorwärmespeicher 209, d.h. im besonderen zeitweise auf über 60°C erwärmt werden. Eine Legionellen-Bildung im Brauchwasser wird somit verhindert. Dies wird erst durch das schaltbare Volumen und die darüber gezielt variierbare Wärmeleitung zwischen dem inneren und äußeren Volumen erreicht. Ist das schaltbare Volumen evakuiert, so wirkt es als thermische Isolierung zwischen innerem und äußerem Volumen. Ein Wärmeübergang ist in diesem Zustand gemindert. Das Innenmedium (Brauchwasser) kann also heißer sein als das Außenmedium (Heizungswasser). Die Temperatur des Brauchwassers kann durch die gezielte Ansteuerung des schaltbaren Volumens wärmer oder kälter temperiert werden, dadurch entfällt die Verbrühungsgefahr und das in diesem Zusammenhang vorgeschriebene Verbrühungsschutzventil.

### Bezugszeichenliste

- 100: Solarwärmespeicher
- 101: Wärmetauscher
- 102: Solaranlage
- 103: Externer Durchlauf-Wärmetauscher
- 104: Verbrennungsheizung
- 105: Solarvorlauf
- 106: Solarrücklauf
- 107: Heizungsrücklauf
- 108: Heizungsvorlauf
- 109: Schichtladervorrichtung
- 110: Pumpe
- 111: externer Wärmetauscherrücklauf
- 112: Rückschlagventil
- 113: Mischventil
- 200: Schaltbares Volumen
- 201: Wärmespeicher
- 202: Solaranlagenvorlauf
- 203: Solaranlagenrücklauf
- 204: Brauchwasseranschluss
- 206: Entlüftungsanschluss
- 207: Heizungswasser/ äußeres Volumen /erstes Volumen
- 208: Brauchwasser/ inneres Volumen / zweites Volumen
- 209: Kondensator-Wärmetauscher
- 210: Kondensator-Wärmetauscher
- 211: Heizungsvorlauf
- 212: Heizungsrücklauf
- 213: Solarwärmetauscher
- 214: Wärmepumpe
- 215: Schichtladervorrichtung
- 216: Entleerungsventil
- 217: Außenisolierung
- 218: Zirkulationsleitung
- 219: Opferanode
- 220: Wand
- 221: Sicherheitsventil
- 222: Ausdehnungsgefäß
- 223: Vakuumventil
- 224: Befüllungsventil
- 225: Entlüftungsventil
- 226: Entleerungsventil
- 227: Schläuche/ Rohre
- 228: Fluidbehälter
- 229: Pumpe
- 231: Vakuumpumpe
- 232: Steuergerät
- 233: Kabel
- 234: Heißgasleitung
- 235: Flüssigleitung
- 236: Kaltwasseranschluss
- 239: Rücklauf Wärmepumpe
- 240: Vorlauf Wärmepumpe
- 241: Verbrühschutzventil
- 242: Anschluss für andere Wärmequellen
- 243: Mischventil
- 244: Pumpe
- 245: externer Durchlauf-Wärmetauscher für Brauchwassererwärmung
- 246: Mischventil
- 250 - 253: Ventil
- 255: Sensoren zur Erfassung des Fluidniveaus

## Patentansprüche

1. Wärmespeicher mit wenigstens einem ersten und einem zweiten, getrennt voneinander jeweils mit einem Medium befüllbaren und/oder durchströmbaren Volumen, die in thermischen Kontakt stehen oder bringbar sind,
**dadurch gekennzeichnet, dass** zwischen dem ersten und dem zweiten Volumen wenigstens ein weiteres mit einem Fluid befüllbares und entleerbares Volumen, ein so genanntes schaltbares Volumen, vorgesehen ist, das mit dem ersten und zweiten Volumen ausschließlich in thermischem Kontakt steht.

2. Wärmespeicher nach Anspruch 1,
**dadurch gekennzeichnet, dass** das schaltbare Volumen von einem Gehäuse ganz umgeben ist.

3. Wärmespeicher nach einem der Ansprüche 1 oder 2,
**dadurch gekennzeichnet, dass** das schaltbare Volumen über wenigstens eine Zu-und Ableitung verfügt und darüber mit einem Fluid befüllbar oder entleerbar oder evakuierbar ist.

4. Wärmespeicher nach einem der Ansprüche 2 oder 3,
**dadurch gekennzeichnet, dass** das Gehäuse des schaltbaren Volumens aus thermisch leitendem Material besteht.

5. Wärmespeicher nach einem der Ansprüche 1 bis 4,
**dadurch gekennzeichnet, dass** innerhalb des schaltbaren Volumens wenigstens ein Verdrängungskörper mit variabel einstellbarem Körpervolumen vorgesehen ist und dass durch Vergrößerung des Körpervolumens das Fluid aus dem schaltbaren Volumen verdrängbar, d.h. entleerbar ist.

6. Wärmespeicher nach einem der Ansprüche 3 bis 5,
**dadurch gekennzeichnet, dass** zur Evakuierung des schaltbaren Volumens die Ableitung mit einer Unterdruckquelle verbindbar ist.

7. Wärmespeicher nach einem der Ansprüche 3 bis 6,
**dadurch gekennzeichnet, dass** die Zuleitung mit einer Förderpumpe verbindbar ist, die das Fluid aus einem Reservoir in das schaltbare Volumen fördert.

8. Wärmespeicher nach einem der Ansprüche 2 bis 7,
**dadurch gekennzeichnet, dass** an dem Gehäuse des schaltbaren Volumens mindestens ein Befüllungs- und Entleerungsventil und ein Entlüftungsventil und/ oder ein Ausdehnungsgefäß und/oder ein Überdruckventil und/oder ein Vakuumventil angebracht sind.

9. Wärmespeicher nach Anspruch 8,
**dadurch gekennzeichnet, dass** die Ventile elektrisch ansteuerbar sind, vorzugsweise als Magnetventile ausgebildet sind.

10. Wärmespeicher nach einem der Ansprüche 1 bis 9,
**dadurch gekennzeichnet, dass** ein Steuergerät vorgesehen ist, das die Befüllung, die Entleerung oder die Evakuierung des schaltbaren Volumens und damit die Wärmeübertragung zwischen dem ersten Volumen und dem zweiten Volumen steuert.

11. Wärmespeicher nach einem der Ansprüche 1 bis 10,
**dadurch gekennzeichnet, dass** das erste und zweite Volumen einem inneren und äußeren Speichervolumen eines Doppelmantelspeichers entsprechen,
dass das innere Speichervolumen von einem weiteren Volumen umschlossen ist, dem so genannten schaltbaren Volumen, und
dass das schaltbare Volumen vollständig oder teilweise von dem äußeren Speichervolumen umgeben ist.

12. Wärmespeicher nach Anspruch 11,
**dadurch gekennzeichnet, dass** das innere Speichervolumen wenigstens mit einem Zu- und Ablauf eines Brauchwasserleitungssystems und das äußere Speichervolumen mit wenigstens einem Zu- und Ablauf eines Heizungsflüssigkeitssystems verbunden ist oder umgekehrt.

13. Wärmespeicher nach einem der Ansprüche 11 oder 12,
**dadurch gekennzeichnet, dass** das innere und/oder das äußere Speichervolumen wenigstens mit einem Wärmetauscher thermisch gekoppelt ist/sind.

14. Wärmespeicher nach Anspruch 13,
**dadurch gekennzeichnet, dass** der Wärmetauscher mit einer Wärme- oder Kältequelle verbunden ist.

15. Wärmespeicher nach Anspruch 14,
**dadurch gekennzeichnet, dass** die Wärmequelle eine Solaranlage, eine Wärmepumpe oder eine Verbrennungsheizung ist.

16. Wärmespeicher nach einem der Ansprüche 13 bis 15,
**dadurch gekennzeichnet, dass** eine Wärmepumpe mit einem Kältemittelkreislauf, und im inneren und äußeren Speichervolumen jeweils ein von Kältemittel durchströmbarer Wärmetauscher vorgesehen ist, und
dass die Wärmetauscher derart in den Kältemittelkreislauf der Wärmepumpe integriert sind, dass jeweils nur ein Wärmetauscher oder beide Wärmetauscher hintereinander von Kältemittel des Kältemittelkreislaufs durchströmbar ist/sind.

17. Wärmespeicher nach einem der Ansprüche 13 bis 16,
**dadurch gekennzeichnet, dass** der Wärmetauscher jeweils als Schichtlader ausgebildet ist.

18. Wärmespeicher nach einem der Ansprüche 11 bis 17,
**dadurch gekennzeichnet, dass** das äußere Speichervolumen von einer thermischen Dämmung umgeben ist.

19. Wärmespeicher nach einem der Ansprüche 10 bis 18
**dadurch gekennzeichnet, dass** das Befüllen und das Entleeren des schaltbaren Volumens mit dem Fluid in Abhängigkeit von der oder den für das Erwärmen des Wärmespeichers jeweils aktiven Wärmequellen und/ oder den aktuellen Temperaturen der Medien im ersten und zweiten Speichervolumen mit einem Steuergerät steuerbar ist.

20. Verfahren zum Betreiben eines Wärmetauschers nach einem der Ansprüche 15 bis 19, der für eine Brauch- und Heizungswassererwärmung in einem Gebäude eingesetzt wird,
**dadurch gekennzeichnet, dass** zu Zeiten einer Inbetriebnahme der Solaranlage das schaltbare Volumen derart mit einem Fluid beschickt wird, dass zwischen dem inneren und äußeren Speichervolumen ein Wärmübergang eingestellt wird, der zu einem Temperaturniveau im inneren Speichervolumen von zeitweise oder andauernd wenigstens 60°C führt, und
dass zu Zeiten einer Inbetriebnahme der Wärmepumpe das schaltbare Volumen teilweise oder ganz entleert und **dadurch** eine thermische Isolierung zwischen dem inneren und äußeren Speichervolumen herbeigeführt wird, wobei das innere Speichervolumen wenigstens kurzzeitig in periodischer Wiederkehr auf ein Temperaturniveau von wenigsten 60°C aufgewärmt wird.

## Claims

1. A heat accumulator comprising at least one first and one second volume which are separate from one another, which can be respectively filled with, or passed through by a medium, and which are in or can be brought into thermal contact, **characterised in that** at least one further volume which can be filled with a fluid and emptied, a so-called switchable volume, is provided between the first and the second volume, said switchable volume being exclusively in thermal contact with the first and second volumes.

2. The heat accumulator according to claim 1, **characterised in that** the switchable volume is completely surrounded by a housing.

3. The heat accumulator according to one of claims 1 or 2, **characterised in that** the switchable volume has at least one feed line and drain line and can be filled with a fluid or emptied or evacuated thereby.

4. The heat accumulator according to one of claims 2 or 3, **characterised in that** the housing of the switchable volume consists of a heat-conducting material.

5. The heat accumulator according to one of claims 1 to 4, **characterised in that** at least one displacement body having a variably adjustable body volume is provided inside the switchable volume and that the fluid can be displaced, i.e. emptied from the switchable volume, by enlarging the body volume.

6. The heat accumulator according to one of claims 3 to 5, **characterised in that** the drain line can be connected to a vacuum source to evacuate the switchable volume.

7. The heat accumulator according to one of claims 3 to 6, **characterised in that** the feed line can be connected to a feed pump which conveys the fluid from a reservoir into the switchable volume.

8. The heat accumulator according to one of claims 2 to 7, **characterised in that** at least one filling and emptying valve and a bleed valve and/or an expansion vessel and/or an excess pressure valve and/or a vacuum valve are attached to the housing of the switchable volume.

9. The heat accumulator according claim 8, **characterised in that** the valves are electrically controllable, preferably are configured as solenoid valves.

10. The heat accumulator according to one of claims 1 to 9, **characterised in that** a controller is provided, which controls the filling, the emptying or the evacuation of the switchable volume and thereby controls the heat transfer between the first volume and the second volume.

11. The heat accumulator according to one of claims 1 to 10, **characterised in that** the first and second volumes correspond to an inner and outer accumulator volume of a double-jacket accumulator, that the inner accumulator volume is enclosed by another volume, the so-called switchable volume, and that the switchable volume is completely or partially surrounded by the outer accumulator volume.

12. The heat accumulator according to claim 11, **characterised in that** the inner accumulator volume is connected to at least one inlet and outlet of a domestic water system and that the outer accumulator volume is connected to at least one inlet and outlet of a heating liquid system or conversely.

13. The heat accumulator according to one of claims 11 or 12, **characterised in that** the inner and/or the outer accumulator volumes is/are at least thermally coupled to a heat exchanger.

14. The heat accumulator according to claim 13, **characterised in that** the heat exchanger is connected to a heat or cold source.

15. The heat accumulator according to claim 14, **characterised in that** the heat source is a solar system, a heat pump or combustion heating.

16. The heat accumulator according to one of claims 13 to 15, **characterised in that** there is provided a heat pump with a coolant circuit, and in the inner and outer accumulator volumes respectively one heat exchanger through which coolant can flow, and that the heat exchangers are integrated in the coolant circuit of the heat pump in such a manner that coolant in the coolant circuit can flow through only one heat exchanger or both heat exchangers successively.

17. The heat accumulator according to one of claims 13 to 16, **characterised in that** the heat exchanger is configured in each case as a stratified charger.

18. The heat accumulator according to one of claims 11 to 17, **characterised in that** the outer accumulator volume is surrounded by thermal insulation.

19. The heat accumulator according to one of claims 10 to 18, **characterised in that** the filling and emptying of the switchable volume with fluid can be controlled by means of a controller depending on the respectively active heat sources for the heating of the heat accumulator and/or the current temperatures of the media in the first and second storage volumes.

20. A method for operating a heat exchanger according to one of claims 15 to 19, which is used for heating domestic and heating water in a building, **characterised in that** at times of starting up the solar system, the switchable volume is supplied with a fluid in such a manner that heat transfer is established between the inner and outer accumulator volumes, which leads to a temperature level in the inner accumulator volume of temporarily or permanently at least 60°C and
that at times of starting up the heat pump, the switchable volume is partially or completely emptied and thermal insulation is thereby brought about between the inner and outer accumulator volumes, wherein the inner accumulator volume is at least briefly heated to a temperature level of at least 60°C in a periodically recurrent manner.

## Revendications

1. Accumulateur de chaleur comportant au moins un premier et un deuxième volume, séparés l'un de l'autre, pouvant être respectivement remplis et/ou traversés par un milieu, qui sont ou peuvent être amenés en contact thermique,
**caractérisé en ce que**, entre le premier et le deuxième volume, au moins un autre volume pouvant être rempli et ou vidé d'un fluide, ce que l'on appelle un volume communiquant, est prévu, lequel est en contact thermique exclusivement avec le premier et le deuxième volume.

2. Accumulateur de chaleur selon la revendication 1,
**caractérisé en ce que** le volume communiquant est entièrement entouré par un logement.

3. Accumulateur de chaleur selon une des revendications 1 ou 2,
**caractérisé en ce que** le volume communiquant dispose d'au moins une conduite d'amenée et d'évacuation et peut par celle-ci être rempli ou vidé ou évacué d'un fluide.

4. Accumulateur de chaleur selon une des revendications 2 ou 3,
**caractérisé en ce que** le logement du volume communiquant est constitué d'un matériau thermiquement conducteur.

5. Accumulateur de chaleur selon une des revendications 1 à 4,
**caractérisé en ce qu** à l'intérieur du volume communiquant, au moins un corps de refoulement ayant un volume de corps réglable de manière variable est prévu et **en ce que** le fluide peut être refoulé, c'est-à-dire vidé du volume communiquant en agrandissant le volume de corps.

6. Accumulateur de chaleur selon une des revendications 3 à 5,
**caractérisé en ce que**
pour évacuer le volume communiquant, la conduite d'évacuation peut être reliée à une source de dépression.

7. Accumulateur de chaleur selon une des revendications 3 à 6,
**caractérisé en ce que** la conduite d'amenée peut être reliée à une pompe d'alimentation, qui transporte le fluide depuis un réservoir dans le volume communiquant.

8. Accumulateur de chaleur selon une des revendications 2 à 7,
**caractérisé en ce que**
sur le logement du volume communiquant, au moins une soupape de remplissage et d'évacuation et une soupape de purge d'air et/ou un vase d'expansion et/ou une soupape de surpression et/ou une soupape à vide sont montées.

9. Accumulateur de chaleur selon la revendication 8,
**caractérisé en ce que** les soupapes peuvent être commandées électriquement, de préférence sont réalisées comme des électrovannes.

10. Accumulateur de chaleur selon une des revendications 1 à 9,
**caractérisé en ce que** un appareil de commande est prévu, lequel commande le remplissage, le vidage ou l'évacuation du volume communiquant et donc la transmission de chaleur entre le premier volume et le deuxième volume.

11. Accumulateur de chaleur selon une des revendications 1 à 10,
**caractérisé en ce que** le premier et le deuxième volume correspondent à un volume d'accumulation intérieur et extérieur d'un accumulateur à double enveloppe, **en ce que** le volume d'accumulation intérieur est enveloppé par un autre volume, ledit volume communiquant, et **en ce que** le volume communiquant est complètement ou partiellement entouré par le volume d'accumulation extérieur.

12. Accumulateur de chaleur selon la revendication 11,
**caractérisé en ce que** le volume d'accumulation intérieur est relié au moins à une amenée et évacuation d'un système de canalisation d'eau de consommation domestique et le volume d'accumulation extérieur est relié à au moins une amenée et évacuation d'un système de liquide chauffant ou inversement.

13. Accumulateur de chaleur selon une des revendications 11 ou 12,
**caractérisé en ce que** le volume d'accumulation intérieur et/ou extérieur est/sont reliés thermiquement au moins à un échangeur thermique.

14. Accumulateur de chaleur selon la revendication 13,
**caractérisé en ce que** l'échangeur thermique est relié à une source de chaleur ou de froid.

15. Accumulateur de chaleur selon la revendication 14,
**caractérisé en ce que** la source de charge est une installation solaire, une pompe à chaleur ou un chauffage par combustion.

16. Accumulateur de chaleur selon une des revendications 13 à 15,
**caractérisé en ce que** une pompe à chaleur comportant un circuit de milieu de refroidissement et, dans le volume d'accumulation intérieur et extérieur, un échangeur thermique respectif étant traversé par un milieu de refroidissement est prévu, et **en ce que** les échangeurs thermiques sont intégrés dans le circuit de milieu de refroidissement de la pompe à chaleur de telle sorte que respectivement seul un échangeur thermique ou les deux échangeurs thermiques l'un derrière l'autre sont/soient traversés par le milieu de refroidissement du circuit de milieu de refroidissement.

17. Accumulateur de chaleur selon une des revendications 13 à 16,
**caractérisé en ce que** l'échangeur thermique est respectivement configuré comme un système à injecteur/pompe.

18. Accumulateur de chaleur selon une des revendications 11 à 17,
**caractérisé en ce que** le volume d'accumulation extérieur est entouré par une isolation thermique.

19. Accumulateur thermique selon une des revendications 10 à 18,
**caractérisé en ce que** le remplissage et le vidage du volume communiquant avec le fluide peut être commandé par un appareil de commande en fonction de la ou des sources de chaleur respectivement actives pour le chauffage de l'échangeur thermique et/ou des températures actuelles des milieux dans le premier et le deuxième volume d'accumulation.

20. Procédé d'exploitation d'un échangeur thermique selon une des revendications 15 à 19, lequel est employé dans un bâtiment pour le chauffage de l'eau chaude et de l'eau de consommation domestique,
**caractérisé en ce que** au moment d'une mise en service de l'installation solaire, le volume communiquant est alimenté avec un fluide de sorte que, entre le volume d'accumulation intérieur et extérieur, une transition thermique soit établie, laquelle entraîne un niveau de température ponctuel ou durable dans le volume d'accumulation intérieur d'au moins 60°C,
**en ce que** au moment d'une mise en service de la pompe à chaleur, le volume communiquant est partiellement ou complètement vidé et de ce fait, un isolation thermique entre les volumes d'accumulation intérieur et extérieur est obtenue, moyennant quoi le volume d'accumulation intérieur est chauffé au moins pendant une courte durée à récurrence périodique à un niveau de température d'au moins 60°C.
